# EUROPÄISCHE PATENTSCHRIFT

(11) **EP 0 785 701 B1**
(45) Veröffentlichungstag und Bekanntmachung des Hinweises auf die Patenterteilung: **08.03.2000**
(21) Anmeldenummer: 96120557.2
(22) Anmeldetag: 20.12.1996
(51) Int. Cl.: H05B 37/02

(54) **Vorrichtung zum Steuern eines Leuchtmittels**
Arrangement for controlling a light device
Appareil pour contrôler un moyen d'illumination

(30) Priorität: 17.01.1996 DE 19601489
(43) Veröffentlichungstag der Anmeldung: 23.07.1997
(73) Patentinhaber: Steinel AG, 8840 Einsiedeln (CH)
(72) Erfinder: Steinel, Heinrich Wolfgang, 86825 Bad Wörishofen (DE)
(74) Vertreter: Hiebsch, Gerhard F., Dipl.-Ing.

(56) Entgegenhaltungen:
- WO-A-93/22755
- WO-A-96/11561
- DE-A- 4 202 486
- US-A- 4 823 051

## Beschreibung

Die vorliegende Erfindung betrifft eine Vorrichtung zum Steuern eines Leuchtmittels nach dem Oberbegriff des Patentanspruchs 1.

Aus dem Stand der Technik ist es bekannt, berührungslos Lampen als Reaktion auf externe Parameter wie Umgebungshelligkeit oder Bewegung einer Person ein- bzw. auszuschalten. Derartige sogenannte Sensorleuchten weisen beispielsweise zur Bewegungserfassung einen auf Infrarotbasis arbeitenden Bewegungsfühler sowie eine zugehörige Steuer- und Auswertelektronik auf, die dann -- in Abhängigkeit von einer erfaßten Bewegung eines Objekts -- eine zugehörige Lampe ein- oder ausschaltet.

In der Regel sind derartige Sensorleuchten als kompakte Einheiten mit einem ein oder mehrere Leuchtmittel, die Steuerelektronik und ein Sensorelement aufnehmenden Gehäuse sowie einer Lampenabdeckung versehen, wobei die Leuchte an dem jeweils gewünschten Aufstellungsort angebracht wird. Das Sensorelement ist dann frei auf den gewünschten Erfassungsbereich gerichtet und reagiert auf Bewegungen innerhalb dieses Bereichs.

Abgesehen davon, daß im allgemeinen für die -- mechanische und elektrische -- Montage einer solchen bekannten Sensorlampe nicht unbeträchtliche technische Fähigkeiten sowie entsprechende Werkzeuge notwendig sind, ist zum Realisieren einer automatischen, bewegungsabhängigen Lichtsteuerung mittels derartiger Sensorleuchten grundsätzlich die Beschaffung kompletter Einheiten -- also Sensor und Leuchte-- notwendig. Dies bereits bedingt auch relativ hohe Herstellungs- bzw. Verkaufspreise solcher Vorrichtungen.

Ferner ist es bekannt, Bewegungssensoren auf Infrarotbasis auch einzeln -- d. h. getrennt von einem Leuchtengehäuse -- anzubringen; eine derartige Lösung bietet sich insbesondere dann an, wenn der gewünschte Erfassungsbereich nicht durch direkt an der Leuchte sitzende Sensorelemente realisiert werden kann. Allerdings wird durch derartige externe Sensorelemente der Montage- bzw. Schaltungsaufwand zusätzlich erhöht, da für die Verbindung zwischen Sensor und Leuchte das Verlegen mindestens einer weiteren (Netzspannungs-) Leitung notwendig ist.

Aus der DE 42 02 486 A1 ist eine Vorrichtung zum Steuern eines Leuchtmittels nach dem Oberbegriff des Anspruches 1 bekannt. Eine derartige Vorrichtung weist einen Zeit- bzw. Dämmerungsschalter auf, der in Abhängigkeit von einem gewünschten Schaltzeitpunkt bzw. einer Außenhelligkeit das Leuchtmittel aktiviert.

Eine Vorrichtung zur Bewegungserfassung ist aus der WO 93/22755 bekannt. Hier erzeugt eine in einem zu überwachenden Raum angeordnete Infrarot-Bewegungsmeldervorrichtung einer Alarmanlage ein Alarmsignal als Reaktion auf eine detektierte Bewegung, und aktiviert daraufhin angeschlossene Alarmgeber.

Hinsichtlich ihrer Eignung zur Bewegungserfassung zusammen mit Leuchtmitteln sind Infrarot-Bewegungsdetektoren jedoch mit einer Anzahl von Nachteilen behaftet. Nicht nur besteht die Gefahr einer Beeinflussung des Infrarot-Detektors durch von dem Leuchtmittel emittierte Strahlung; auch eignet sich ein Infrarotsensor insbesondere nicht zum Betrieb hinter Infrarot-undurchlässigen Abdeckungen, wie beispielsweise Lampenschirmen oder Gehäusen.

Schließlich stellt insbesondere die in der Wo 93/22755 dargestellte Vorrichtung eine Anlage mit erheblichem Montage- und Einrichtungsaufwand dar, so dass insbesondere eine modulartige Montage auch für Nicht-Fachleute praktisch unmöglich ist.

Aufgabe der vorliegenden Erfindung ist es daher, eine Vorrichtung zum automatischen, anwesenheits- bzw. bewegungsabhängigen Steuern eines Leuchtmittels zu schaffen, deren Handhabung bzw. Bedienung erheblich vereinfacht ist und die ohne zusätzlichen Verkabelungs- oder Montageaufwand montiert werden kann, insbesondere auch unter einem Lampenschirm.

Die Aufgabe wird durch die Vorrichtung zum Steuern eines Leuchtmittels mit den Merkmalen des Patentanspruchs 1 gelöst.

Vorteilhaft gestattet die Verwendung der erfindungsgemäßen Steuervorrichtung das berührungslose Einschalten des Leuchtmittels bei Anwesenheit bzw. Bewegung einer Person, ohne daß etwa ein Schalter betätigt werden müßte. Da zudem die erfindungsgemäße Vorrichtung das Leuchtmittel deaktiviert, wenn keine Bewegung bzw. Anwesenheit erfaßt wird -- sich also beispielsweise niemand im Raum aufhält -- erübrigt sich ein manuelles Ausschalten des Lichtes, welches ohnehin häufig vergessen wird, so daß mit beträchtlichen Energieeinsparungen durch den Einsatz der erfindungsgemäßen Vorrichtung zu rechnen ist.

Vorteilhaft ermöglicht dabei der Leuchtmittelsockel das Einschrauben und Halten der gesamten Vorrichtung in einer herkömmlichen Lampenfassung -- beispielsweise einer Schreibtischlampe -- und in die Leuchtmittelfassung kann dann wiederum das Leuchtmittel, beispielsweise eine Glühbirne, eingesetzt werden, während der auf Mikrowellenbasis arbeitende Bewegungs- und Anwesenheitsdetektor -- unabhängig von jeglicher Beschränkung durch das Gehäuse, einen ggf. vorhandenen Lampenschirm oder eine sonstige Abdeckung -- auf Bewegung bzw. Anwesenheit von Personen reagieren kann und entsprechend das Leuchtmittel aktiviert bzw. deaktiviert.

Dies stellt nicht nur im Hinblick auf einfache Montage, sondern auch auf Universalität der Anwendung einen wesentlichen Vorteil dar, denn durch den berührungslosen Radarsensor ist weder ein manuelles Einstellen od. dgl. der Vorrichtung erforderlich, noch ist es etwa notwendig, daß für den Bewegungs- oder Anwesenheitsdetektor ein optischer Zugang bzw. ein freier, nicht abgeschirmter Blickwinkel auf den Erfassungsbereich erhalten bleibt (wie dies etwa bei herkömmlichen Sensorleuchten der Fall ist).

Somit ist dann nicht nur die einfache Nachrüstung bereits vorhandener Leuchten durch einfaches Einschrauben bzw. Einsetzen möglich; zusätzlich sind be- oder verdeckte oder auf andere Weise schlecht zugängliche Leuchten der erfindungsgemäßen Automatisierung zugänglich.

Da zudem erfindungsgemäß ohnehin die über den Leuchtmittelsockel anliegende Netzspannung zur Versorgung der Elektronik der erfindungsgemäßen Vorrichtung (mit-) benutzt wird und das -- bereits vorhandene -- externe Leuchtmittel gesteuert wird, ist ein kompakter, kostengünstiger und seriengeeigneter Aufbau, verbunden mit universeller Einsetzbarkeit in vorhandene Lampenfassungen, erreichbar.

Vorteilhafte Weiterbildungen der Erfindung sind in den Unteransprüchen beschrieben.

So ist besonders bevorzugt das Gehäuse der erfindungsgemäßen Steuervorrichtung symmetrisch zu einer Vertikalachse ausgebildet, wobei die Vertikalachse sich sowohl durch die Leuchtmittelfassung als auch den Leuchtmittelsockel erstreckt. Auf diese Weise ist ein kompakter Aufbau der Vorrichtung erreichbar, insbesondere dann, wenn gemäß einer bevorzugten Weiterbildung das Gehäuse einen zylindrischen bzw. einen konisch zulaufenden Abschnitt aufweist. Auf diese Weise ist zudem das Gehäuse in einfacher Weise als Spritzteil fertigbar.

Während bevorzugt der Radarsensor einen in der Horizontalebene i. w. kreisförmigen Erfassungsbereich aufweist, um die erfindungsgemäße Vorrichtung möglichst universell anwendbar zu gestalten, ist es gemäß einer Weiterbildung bzw. Abwandlung der erfindungsgemäßen Vorrichtung möglich, den Erfassungsbereich zu beeinflussen und mit einer Richtwirkung zu versehen. Derartige Mittel zum Einstellen des Erfassungsbereichs sind beispielsweise Reflektoren, Blenden od. dgl. Maßnahmen, die auf eine Richtcharakteristik der für den Radarsensor verwendeten Antenne wirken.

Besonders geeignet ist die Antenne als Schlitz- oder Mikrostreifenleitungsantenne ausgebildet, da derartige Antennenformen nicht nur einfach und kostengünstig mit guter Reproduzierbarkeit herstellbar sind, sondern zudem eine einfache Beeinflussung der Richtcharakteristik ermöglichen.

Eine Mikrowellenfrequenz im Bereich zwischen etwa 2 und etwa 20 GHz, beispielsweise im Bereich von 2,4 oder 5,7 GHz ermöglicht in vorteilhafter Weise zum einen die dämpfungsarme Durchdringung des Gehäuses bzw. weiterer, ggf. zusätzlich vorhandener Lampenschirme oder Abdeckungen, während andererseits eine befriedigende Reichweite mit geringer Ausgangsleistung des Radarsensors erzielbar ist.

Durch ein zusätzliches Erfassen der Umgebungshelligkeit fließt dieser Steuerparameter gemäß einer bevorzugten Weiterbildung der Erfindung ein in die Beleuchtungsautomatisierung, die mit der vorliegenden Erfindung bewirkt wird. Hierdurch ist dann eine Aktivierung bzw. Deaktivierung des Leuchtmittels nicht nur in Abhängigkeit von der Bewegung bzw. Anwesenheit eines Objekts, sondern zusätzlich abhängig vom Pegel des Umgebungslichts möglich, so daß zusätzliches Potential für erhebliche Energieeinsparungen geschaffen wird.

Gemäß einer alternativen Ausführungsform der vorliegenden Erfindung, für die unabhängig Schutz beansprucht wird, ist im Gehäuse selbst kein Bewegungs- oder Anwesenheitsdetektor vorhanden; vielmehr ist dieser -- netzunabhängig, beispielsweise batteriebetrieben -- in einem separaten Gehäuse an beliebiger Stelle befestigbar und über eine Funkstrecke (Funksignalsender am externen Bewegungs- oder Anwesenheitssender, zugehöriger Funksignalempfänger im Gehäuse der Vorrichtung) an das mittels Leuchtmittelsockel/Leuchtmittelfassung eingesetzte Gerät drahtlos angebunden. In diesem Fall wäre der Funksignalempfänger Teil der erfindungsgemäßen Steuereinrichtung zum Aktivieren des Leuchtmittels.

Durch diese erfindungsgemäße Weiterbildung kann zusätzlich einer Notwendigkeit Rechnung getragen werden, einen bestimmten Erfassungsbereich vorzusehen, der mit in das Gehäuse integriertem Radarsensor (allein) nicht realisierbar ist. Dies könnte auch eine fakultative Maßnahme sein, der Funksignalempfänger kann also im Gehäuse zusätzlich zu einem dort vorhandenen Radarsensor eingerichtet sein und drahtlos weitere Erfassungsbereiche durch einen oder mehrere externe Sensoren anbinden. In einem solchen Fall wäre es dann beispielsweise möglich, durch geeignete logische Auswertung einer Mehrzahl von Aktivierungssignalen den entsprechenden Betriebszustand des Leuchtmittels einzustellen.

Weitere Vorteile, Merkmale und Einzelheiten der Erfindung ergeben sich aus der nachfolgenden Beschreibung von Ausführungsbeispielen anhand der Zeichnung; diese zeigt in
- Fig. 1:: eine teilweise geschnittene Seitenansicht der in einen Lampensockel integrierten, erfindungsgemäßen Vorrichtung zur Bewegungserfassung gemäß einer ersten Ausführungsform; und
- Fig. 2:: ein Blockschaltbild der Vorrichtung gemäß Fig. 1.

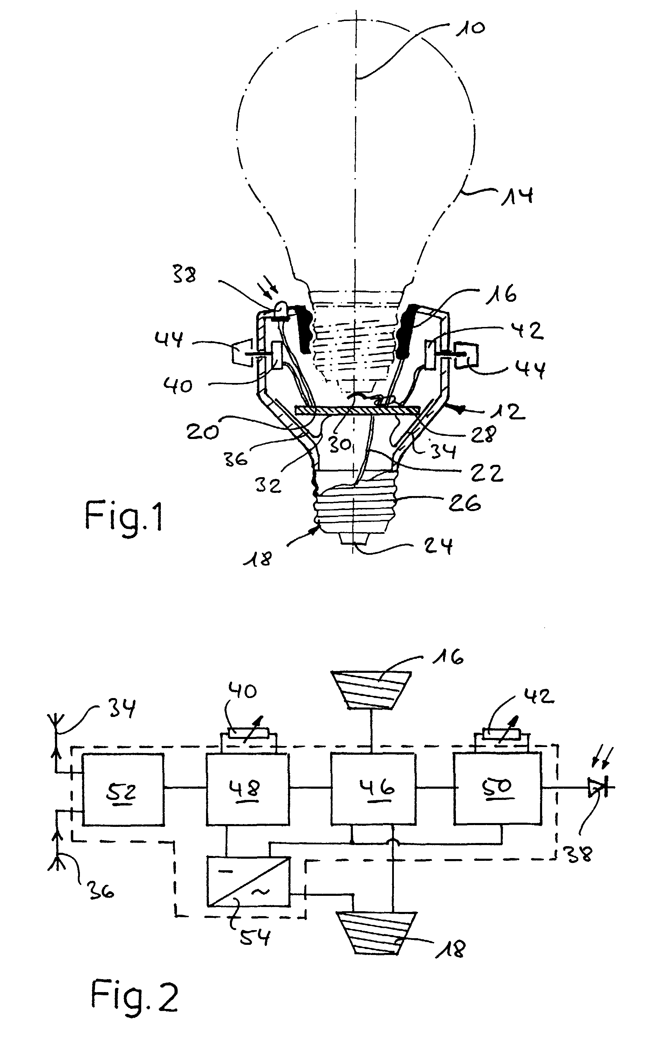

Ein zu einer Symmetrieachse 10 radialsymmetrisch geformtes, als Kunststoff-Spritzteil hergestelltes Gehäuse 12 weist an einem Ende eine zum Aufnehmen einer -- handelsüblichen und in der Fig. 1 schematisch angedeuteten -- Glühlampe 14 vorgesehene Schraubsockelfassung 16 auf, die zum Einschrauben des Leuchtmittels mit einem Schraubsockel E27 eingerichtet ist.

Der Schraubsockelfassung 16 entgegengesetzt, ist am Gehäuse 12 endseitig im unteren Bereich ein Schraubsockel 18 so an das Gehäuse 12 angesetzt, daß die Symmetrieachse 10 zusätzlich gemeinsame Symmetrieachse für die Schraubsockelfassung 16 und den Schraubsockel 18 ist.

Eine die Elektronik der vorliegenden Vorrichtung zur Bewegungserfassung gemäß dem dargestellten Ausführungsbeispiel tragende Platine 20 (PCB) ist einerseits über netzseitige Zuleitungen 22 mit dem Bodenkontakt 24 bzw. dem Ringkontakt 26 des Schraubsockels 18 verbunden, und andererseits wird über leuchtmittelseitige Zuleitungen 28 eine elektrische Verbindung zwischen der Platine 20 und einem Leuchtmittel-Bodenkontakt 30 bzw. der Schraubsockelfassung 16 -- die den Ringkontakt eines eingesetzten Leuchtmittels kontaktiert -- hergestellt.

Über Antennenleitungen 32 ist die Platine ferner mit einer -- in der Fig. 1 lediglich schematisch gezeigten -- Sendeantenne 34 sowie einer Empfangsantenne 36 verbunden. Im dargestellten Ausführungsbeispiel ist sowohl die Sendeantenne 34 als auch die Empfangsantenne 36 als Drahtstück realisiert.

Eine Photodiode 38 sowie zwei Drehsteller 40,42 mit an Drehachsen außerhalb des Gehäuses sitzenden Bedienknöpfen 44 sind zusätzlich mit der auf der Platine 20 vorgesehenen -- in der Figur als nicht näher gezeigten -- Erfassungs-, Steuer- und Auswertelektronik verbunden.

Fig. 2 verdeutlicht schematisch die wesentlichen funktionalen Komponenten der in Fig. 1 dargestellten Ausführungsform.

Als zentrale Einheit stellt eine Schalt-/Steuereinheit 46 die Verbindung zwischen dem Schraubsockel 18 und der Schraubsockelfassung 16 her. Dabei wird die Funktion der Schalt-/Steuereinheit 46 zum einen durch das Steuersignal eines Bewegungs-/Anwesenheitsdetektors 48 bestimmt, und zum anderen durch das Steuersignal eines (Umgebungs-) Helligkeitsdetektors bzw. einer Dämmerungsschaltung 50.

Während der Dämmerungsschalter 50 mit der Photodiode 38 verbunden ist und eine Eigenlichtkompensation (für eine Berücksichtigung des im eingeschalteten Zustands der Lampe 14 zusätzlich auf die Photodiode 38 fallenden Lichts) besitzt, ist dem Bewegungsdetektor 48 eine Hochfrequenzbaugruppe 52 vorgeschaltet, die die zur Bewegungserkennung notwendigen Sendesignale für die Sendeantenne 34 erzeugt sowie reflektierte Sendesignale über die Empfangsantenne 36 empfängt und aufbereitet. Im dargestellten Ausführungsbeispiel dient dabei der erste Drehsteller 40 zur Einstellung von Empfindlichkeit und/oder Erfassungsbereich des Bewegungsdetektors 48, während der zweite Drehsteller 42 die für ein Einschalten der Lampe 14 erforderliche Lichtschwelle des Umgebungslichts vorgibt.

Mittels eines Netzteils 54, das über den Schraubsockel 18 die zugeführte Netzspannung umsetzt, wird die notwendige Betriebsspannung der Komponenten erzeugt.

Wie durch die gestrichelte Linie in der Fig. 2 angedeutet, sind die Funktionsbaugruppen 54, 52, 50, 48, 46 auf der Platine 20 realisiert.

Es wird zur Realisierung des Bewegungs-/ Anwesenheitsdetektors 48 bzw. der zugehörigen Hochfrequenzbaugruppe 52 ein Mikrowellensensor benutzt, der auf Impulsbasis arbeitet und ein breitbandiges Impuls-Sendespektrum ausstrahlt. Mittels eines vorgegebenen, einem Erkennungsabstand entsprechenden, verzögerten Zeittores (gebildet aus Hinlauf- und Rücklaufzeit eines Signalimpulses von einem im Erkennungsabstand stehenden Objekt) wird eine Vielzahl von reflektierten Impulsen erfaßt, und aus deren Empfangshäufigkeit (Integration) bzw. der Veränderung der Empfangshäufigkeit wird auf eine Bewegung des zu erfassenden Objektes rückgeschlossen. Alternativ erlaubt die Impuls-Radartechnik auch eine Anwesenheitserfassung dergestalt, daß nicht reflektierte Signale von einem konstanten Erfassungsabstand -- entsprechend gewissermaßen einer Schale im Raum -- empfangen und ausgewertet werden, sondern der schalenförmige Erfassungsbereich kontinuierlich und zyklisch elektronisch durchfahren wird, so daß eine Anwesenheitserkennung -- ohne daß sich etwa das Objekt bewegen muß -- möglich ist.

Ein solcher, auf Impulsbasis arbeitender Radarsensor ist in gängigen Frequenzbereichen -- 2 GHz, 5,7 GHz oder höher -- betreibbar, sorgt durch die emittierten bzw. reflektierten Radarimpulse für eine befriedigende Durchdringung des Gehäuses 12 sowie zusätzlich von Lampenschirmen, Aufsätzen und dgl., ohne daß etwa Sichtkontakt zu den zu erfassenden Objekten oder Personen im Erfassungsbereich bestehen muß.

Der Erfassungsbereich ist bevorzugt kreisförmig und radialsymmetrisch zur Symmetrieachse 10 und wird i. w. durch die Strahlungscharakteristika der eingesetzten Antennen -- näheres dazu unten -- sowie die emittierte Sendeleistung beeinflußt.

Ein weiterer Vorteil der beschriebenen Impulstechnik liegt in der -- rein Laufzeit-bedingten -- konstanten Reichweite, die unabhängig von einem vor dem Sensor vorgesehenen, zu durchdringenden Material ist (z.B. dem Material des Lampenschirms). Darüber hinaus besitzt ein solcher Sensor eine sehr geringe Abstrahlleistung, ist in der Herstellung durch geringen Hardware- und Abgleichaufwand preiswert, und ist letztendlich unempfindlich gegen beliebige Störungen außerhalb des durch das Zeittor vorgegebenen Erfassungsbereiches. Da zudem bevorzugt ein solcher Sensor extrem kurze Impulssignale (im ns-Bereich) mit einer demgegenüber langen (z.B. Faktor 1000) Periodendauer ausstrahlt, ist eine gegenseitige Beeinflußung einer Mehrzahl solcher Sensoren in entsprechend mehreren Lampen in einem Raum praktisch ausgeschlossen.

Gemäß einer bevorzugten Weiterbildung kann zudem die Bewegungs- bzw. Anwesenheitserfassung gemäß der Module 48,52 eine Mehrzahl von diskret erfaß- und auswertbaren Entfernungszonen aufweisen, wobei die Anwesenheit einer Person in einer jeweiligen Entfernungszone durch geeignete Auswertung einem bestimmten Schaltzustand zugeordnet sein kann.

Wie bereits erwähnt, ist Art und Ausbildung der Sende- bzw. Empfangsantenne 34,36 entscheidend für den Erfassungsbereich der vorliegenden Vorrichtung, so daß eine dem jeweiligen Einsatzzweck angepaßte Antennenform zu wählen sein wird.

Während beispielsweise eine universelle Ausführungsform der erfinungsgemäßen, in einen Lampensockel integrierten Bewegungserfassungseinrichtung einen in horizontaler Richtung kreisförmigen Erfassungsbereich sinnvoll erscheinen lassen könnte -- aus jeder Richtung sich nähernde Personen aktivieren bei Erfassung die Lampe in etwa demselben Abstand -- könnten für besondere Anwendungsfälle Einrichtungen vorgesehen sein, die eine Richtwirkung der Erfassung des integrierten Bewegungsmelders herbeiführen: Da durch die eingesetzten Mikrowellen nicht nur das Gehäuse 12 oder ggf. zusätzlich vorhandene Lampenschirme, sondern auch übliche Baustoffe durchdrungen werden, wäre es möglich, daß -- unbeabsichtigt -- sich hinter einer Wand bewegende Personen die Lampe aktivieren, obwohl der Erfassungsbereich auf einen Raum beschränkt sein sollte. Für einen solchen Einsatzzweck wäre dann keine Antenne mit einer Rundstrahlcharakteristik zu verwenden, sondern es wäre eine angepaßte bzw. nachträglich in ihrer Richtwirkung anpaßbare Richtantenne zu verwenden.

Konkret bietet sich zum Erzielen einer nahezu kreisförmigen Rundumcharakteristik die Verwendung einfacher Leitungs-bzw. Drahtstücke als Antennen inbesondere dann an, wenn ein (breitbandiger) Impulsradarsensor eingesetzt wird. Bei einer Verwendung mit einem -- eher schmalbandigen und daher anpassungsbedürftigen -- Dopplersensor wäre eine entsprechende Draht- bzw. Leitungsantenne sorgfältig in ihrer Länge abzustimmen.

Alternativ bietet sich aufgrund der zylindrischen bzw. kegligen Bauform eines Lampensockelgehäuses 12 die Verwendung einer oder mehrerer -- auf einem Substrat gebildeter-- Mikrostreifenleitungs- oder Schlitzantennen an, für die nicht nur eine gewünschte Antennencharakteristik einfach berechenbar ist, sondern die zudem kostengünstig herstellbar und gut reproduzierbar ist, so daß besonders Eignung für die Großserienfertigung besteht. Diesbezüglich wäre es dann insbesondere vorteilhaft, die die Antennenstruktur tragende Substrat so (dünn) auszubilden, daß eine entsprechende Antenne beispielsweise entlang der Innenwand des zylindrischen (oberen) Bereichs des Gehäuses 12 angebracht sein könnte. Geeignet zusätzlich vor- bzw. aufsetzbare Reflektoren oder Blendenelemente könnten dann -- auch nachträglich -- vom Benutzer benutzt werden, um den Erfassungsbereich des Bewegungssensors zu manipulieren.

Im Hinblick auf die -- bei dem dargestellten Ausführungsbeispiel vorteilhaft vorgesehene, aber zum Erreichen des Erfindungszwecks keineswegs notwendige -- Dämmerungsschaltung wird bevorzugt ein Lichterfassungselement (beispielsweise die Photodiode 38 im dargestellten Ausführungsbeispiel) benutzt, die für emittiertes Eigenlicht des Leuchtmittels 14 keine oder nur eine geringe spektrale Empfindlichkeit besitzt. Eine solche -- optische -- Eigenlichtimmunität ließe sich zusätzlich durch geeignete optische Filterelemente herbeiführen oder unterstützen. Alternativ oder zusätzlich wird eine Beeinflussung der Dämmerungsschaltung (und damit der Lichtschwelle für das Ein- bzw. Ausschalten der Lampe in Abhängigkeit vom Umgebungslicht) durch eine elektronische Schwellenverschiebung realisiert, die -- einstellbar oder fest -- dem Beitrag des auf den Lichtdetektor 38 fallenden Eigenlichts entspricht. Auf diese Weise wird dann lediglich das Umgebungslicht erfaßt und fließt in die Steuerung ein.

In den Bewegungs- bzw. Anwesenheitsdetektor 48 wird dann das Empfangssignal der HF-Baugruppe 52 ausgewertet. Wesentlicher Bestandteil der Einheit 48 -- neben einer Referenzeinstellung für eine Aktivierungsschwelle -- ist ein Verzögerungsglied, welches bewirkt, daß bei aktivierter Lampe und einem Empfangssignal, das keine Bewegung signalisiert, die Schalt- und Steuereinheit 46 nicht sofort zum Deaktivieren der Lampe angesteuert wird, sondern dies vielmehr erst nach dem Ablauf einer vorbestimmten Zeit geschieht, wenn in der Zwischenzeit nicht erneut eine Bewegung festgestellt wird. Durch eine solche -- vorwähl- bzw. voreinstellbare -- Verzögerungszeit kann das störende, kurzfristige Ein- und Ausschalten der Beleuchtung insbesondere dann vermieden werden, wenn ein Benutzer, beispielsweise bei einer Arbeit am Schreibtisch, sich nicht regelmäßig und kontinuierlich bewegt, sondern zwischenzeitlich unbeweglich bleibt, ohne daß der Bewegungssensor dies erfassen würde (ein im oben beschriebenen Sinne als Anwesenheitssensor ausgebildeter Radarsensor würde allerdings auch in einem solchen Fall feststellen, daß sich eine Person im Erfassungsbereich befindet und entsprechend die Lampe ohnehin aktiviert lassen).

Im Gebrauch wird die erfindungsgemäße Bewegungserfassungsvorrichtung in eine Lampenfassung einer herkömmlichen Leuchte -- beispielsweise einer Schreibtischleuchte -- eingeschraubt. Dementsprechend werden die Sensor- und Auswertmodule 46 bis 52 der Vorrichtung kontinuierlich mit Energie versorgt, die vom Netzteil 54 aus dem Netzstrom aufbereitet wird; eines separaten Netzschalters bedarf es nicht. Da zudem die Realisierung der Sensor- und Steuerelektronik leistungsarm ist, ist der durch die -- permanente -- Aktivierung der Erfassungseinrichtung erforderliche Energieverbrauch vernachlässigbar.

Kommt ein Benutzer dann in den Erfassungsbereich der Sensoreinrichtung -- setzt sich also beispielsweise an den Schreibtisch -- wird diese Bewegung von dem Detektor 48 mittels der HF-Baugruppe 52 und der daran vorgesehenen Antennen erfaßt, da die von der Person ausgehenden Reflexionen ein entsprechendes Bewegung-Steuersignal für die Schalt- und Steuereinheit 46 hervorrufen. Stellt zudem die Dämmerungsschaltungseinheit 50 durch Erfassung des Umgebungslichts mittels der Photodiode 38 fest, daß dieses einen geringen, ein Einschalten der Lampe 14 notwendig machenden Helligkeitswert aufweist, wird daraufhin -- gewissermaßen im Wege einer logischen UND-Verknüpfung -- das Leuchtmittel 14 aktiviert. Auch wenn der Benutzer sich zeitweilig nur wenig bewegt, aber an seinem Platz im Erfassungsbereich verbleibt, verhindert die Verzögerungseinheit in der Bewegungs-Auswertkomponente 48 ein Abschalten des Lichtes, solange es innerhalb des Verzögerungszeitraumes zu einer für den Bewegungssensor erfaßbaren Bewegung kommt. Im Falle der Verwendung eines Anwesenheitsdetektors wird kontinuierlich die Anwesenheit der Person festgestellt, ohne daß sich diese bewegen muß.

Nimmt beispielsweise im Laufe eines Tages die Umgebungshelligkeit in einem Maße zu, daß die Lichtquelle 14 abzuschalten wäre, würde der reine Helligkeitspegel des Umgebungslichtes (mittels der Eigenlichtunterdrückung im Modul 50 um evtl. eigene Strahlungskomponenten der Lichtquelle 14 selbst bereinigt) einen voreingestellten Schwellwert überschreiten, und das Licht würde -- trotz Anwesenheit bzw. Bewegung einer Person im Erfassungsbereich -- abgeschaltet.

Entfernt sich andererseits der Benutzer -- bei eingeschaltetem Leuchtmittel 14 -- aus dem Erfassungsbereich, wird eine Bewegung bzw. eine Anwesenheit durch den Sensor nicht mehr erfaßt, und nach Ablauf der Verzögerungszeit wird durch Wirkung der Einheit 48 die Lampe 14 deaktiviert.

Besonders vorteilhaft ist die vorliegende Erfindung durch die kompakte Ausbildung, die das problemlose Nachrüsten bestehender Leuchten ohne Verkabelungsaufwand oder zusätzliches Werkzeug ermöglicht. Es versteht sich von selbst, daß beliebige Lampenfassungen -- Steck-, Bajonett- oder Schraubfassungen -- von der Erfindung mitumfaßt sind, genauso wie eine mögliche Integration in eine elektronische Kompaktlampe, die selbst schon über eine eigene Steuerelektronik verfügt.

Im Hinblick auf die Ausbildung des Gehäuses sind vielfältige Möglichkeiten gegeben, solange entweder das Gehäuse selbst für die eingesetzten Mikrowellen durchlässig ist, oder aber eine Antenne im Wege einer äußeren Beschichtung an demselben realisiert wird. Ggf. wären -- aus thermischen Gründen od. dgl. -- Belüftungsschlitze o.ä. vorzusehen.

Gemäß einer Weiterbildung der vorliegenden Erfindung ist es zusätzlich möglich, die bei den vorstehenden Ausführungsformen dargestellte digitale Wirkungsweise durch eine Helligkeitsregelung des Leuchtmittels 14 zu ersetzen, d. h. eine umgebungslichtabhängige Regelung der Lichtimmission als Reaktion auf ein (um Eigenlicht bereinigtes) Erfassungssignal der Photodiode 38 bzw. der Dämmerungsschaltung 50 zu realisieren.

## Patentansprüche

1. Vorrichtung zum Steuern eines Leuchtmittels (14) mit einem einen Leuchtmittelsockel (18) aufweisenden Gehäuse (12),
einer am Gehäuse (12) vorgesehenen, dem Leuchtmittelsockel (18) entsprechenden Leuchtmittelfassung (16) und einer den Leuchtmittelsockel (18) mit der Leuchtmittelfassung (16) elektrisch verbindenden Steuereinrichtung (28), die zum gesteuerten Aktivieren eines in der Leuchtmittelfassung (16) aufgenommenen Leuchtmittels (14) ausgebildet ist,
dadurch gekennzeichnet,
daß die Steuereinrichtung (28) einen Bewegungs- oder Anwesenheitsdetektor (48, 52) aufweist, der auf Bewegung bzw. Anwesenheit eines Objektes innerhalb eines vorbestimmten Erfassungsbereichs reagiert,
und der Bewegungs- oder Anwesenheitsdetektor als auf Mikrowellenbasis arbeitender Breitband-Impulsradarsensor ausgebildet ist, der das Erfassen von Bewegung oder Anwesenheit auf der Basis von am Objekt reflektierten, breitbandigen Radarimpulsen und des durch ein Zeittor vorgegebenen Erfassungsbereiches bewirkt.

2. Vorrichtung nach Anspruch 1, dadurch gekennzeichnet, daß das Gehäuse (12) eine zu einer Vertikalachse (10) symmetrische Querschnittsform aufweist und die Leuchtmittelfassung (16) und der Leuchtmittelsockel (18) entlang der Vertikalachse (10) an einem oberen bzw. einem unteren Bereich des Gehäuses (12) vorgesehen sind.

3. Vorrichtung nach Anspruch 2, dadurch gekennzeichnet, daß das Gehäuse einen i. w. zylindrischen Abschnitt sowie einen an den zylindrischen Abschnitt ansetzenden, sich zum Leuchtmittelsockel (18) im unteren Bereich verjüngenden, konischen Abschnitt aufweist.

4. Vorrichtung nach Anspruch 2 oder 3, dadurch gekennzeichnet, daß der Radarsensor (48,52) eine Antenne (34,36) aufweist, die in der sich senkrecht zur Vertikalachse (10) liegenden Ebene den Erfassungsbereich des Bewegungs- oder Anwesenheitsdetektors i. w. kreisförmig ausbildet.

5. Vorrichtung nach einem der Ansprüche 1 bis 3, gekennzeichnet durch eine Antenne, die Mittel zum Einstellen des Erfassungsbereichs des Bewegungs- oder Anwesenheitsdetektors aufweist.

6. Vorrichtung nach einem der Ansprüche 1 bis 5, dadurch gekennzeichnet, daß der Radarsensor (48,52) eine Antenne aufweist, die als Schlitzantenne, Mikrostreifenleitungsantenne oder als sonstige, mit auf einem flachen Substrat gebildeten Strahlern aufgebaute Antenne realisiert ist.

7. Vorrichtung nach einem der Ansprüche 1 bis 6, dadurch gekennzeichnet, daß der Radarsensor (48,52) Sendesignale erzeugt, die zwischen 2 und etwa 20 GHz liegen.

8. Vorrichtung nach einem der Ansprüche 1 bis 7, dadurch gekennzeichnet, daß die Steuereinrichtung ein Verzögerungsglied aufweist, das dergestalt ausgebildet ist, daß eine Deaktivierung des Leuchtmittels erst einen vorbestimmten Zeitabstand nach einem Erfassen fehlender Bewegung bzw. fehlender Anwesenheit durch die Steuereinrichtung erfolgt.

9. Vorrichtung nach einem der Ansprüche 1 bis 8, gekennzeichnet durch eine Einrichtung (50,38) zum Erfassen einer Umgebungshelligkeit, wobei diese Einrichtung so auf die Steuereinrichtung wirkt, daß eine Aktivierung oder Deaktivierung des Leuchtmittels von einem Steuersignal der Umgebungshelligkeits-Erfassungseinrichtung abhängig ist.

10. Vorrichtung nach Anspruch 9, dadurch gekennzeichnet, daß die Steuereinrichtung zum kontinuierlichen, stufenlosen Regeln einer Helligkeit des Leuchtmittels (14) als Reaktion auf das Steuersignal der Umgebungshelligkeits-Erfassungseinrichtung ausgebildet ist.

## Claims

1. Device for controlling an illuminant (14) comprising a housing (12) having a cap (18), a holder (16) corresponding to the cap (18) provided on the housing (12) and a control means (28) electrically connecting the cap (18) to the holder (16) and designed for the controlled activation of an illuminant (14) received in the holder (16), characterised in that the control means (28) has a movement or presence detector (48, 52) which reacts to movement or to the presence of an object within a predetermined sensing range, and the movement or presence detector is in the form of a broad-band pulsed radar sensor operating on the basis of microwaves which senses movement or presence on the basis of broad-band radar pulses reflected on the object and the sensing range predetermined by a time gate.

2. Device according to claim 1, characterised in that the housing (12) has a cross-sectional shape symmetrical relative to a vertical axis (10) and the holder (16) and the cap (18) are provided along the vertical axis (10) on upper and lower regions of the housing (12) respectively.

3. Device according to claim 2, characterised in that the housing has a substantially cylindrical portion and a conical portion adjoining the cylindrical portion and tapering towards the cap (18) in its lower region.

4. Device according to claim 2 or claim 3, characterised in that the radar sensor (48, 52) has an aerial (34, 36) which makes the sensing range of the movement or presence detector substantially circular in the plane situated perpendicularly to the vertical axis (10).

5. Device according to one of claims 1 to 3, characterised by an aerial which has means for adjusting the sensing range of the movement or presence detector.

6. Device according to one of claims 1 to 5, characterised in that the radar sensor (48, 52) has an aerial in the form of a slot aerial, a microstrip transmission line aerial or some other aerial designed with radiators formed on a flat substrate.

7. Device according to one of claims 1 to 6, characterised in that the radar sensor (48, 52) generates transmitting signals between 2 and approximately 20 GHz.

8. Device according to one of claims 1 to 7, characterised in that the control means has a delay element which is designed in such a manner that the illuminant is not deactivated until a predetermined time interval after no movement or no presence is sensed by the control means.

9. Device according to one of claims 1 to 8, characterised by a means (50, 38) for sensing ambient brightness, this means acting on the control means in such a manner that the activation or deactivation of the illuminant is dependent on a control signal from the ambient brightness sensing means.

10. Device according to claim 9, characterised in that the control means is designed for the continuous control of the brightness of the illuminant (14) in response to the control signal from the ambient brightness sensing means.

## Revendications

1. Dispositif pour contrôler un moyen d'éclairage (14) et comprenant: un boîtier (12) comportant un socle (18) pour des moyens d'éclairage, un moyen de montage (16) pour un moyen d'éclairage, prévu sur le boîtier (12) et correspondant au socle (18) pour des moyens d'éclairage, et un organe de commande ou de contrôle (28) reliant électriquement le socle (18) pour un moyen d'éclairage au moyen de montage (16) pour un moyen d'éclairage, cet organe étant prévu pour rendre actif de façon contrôlée un moyen d'éclairage (14) monté dans le moyen de montage (16) pour un moyen d'éclairage,
caractérisé en ce que, l'organe de commande (28) comporte un détecteur ou capteur de déplacement ou de présence (48, 52), qui réagit à l'intérieur d'une zone prédéterminée de saisie au déplacement ou à la présence d'un objet.
et en ce que le détecteur de déplacement ou de présence est réalisé sous la forme d'un capteur radar à impulsions, à bande large, travaillant sur la base de micro ondes, et qui met en oeuvre la saisie du déplacement ou de la présence, à partir des impulsions radar à bande large réfléchies sur l'objet et à partir de la zone de saisie prédéterminée par une porte temporelle.

2. Dispositif selon la revendication 1, caractérisé en ce que le boîtier (12) présente une forme de section transversale qui est symétrique par rapport à un axe vertical (10), et en ce que le moyen de montage (16) pour un moyen d'éclairage et le socle (18) pour un moyen d'éclairage sont prévus le long de l'axe vertical (10) sur une zone supérieure ou inférieure du boîtier (12).

3. Dispositif selon la revendication 2, caractérisé en ce que le boîtier comporte un tronçon sensiblement cylindrique, ainsi qu'un tronçon conique allant en s'effilant vers le bas à la partie inférieure vers le socle (18) pour un moyen d'éclairage et se raccordant au tronçon cylindrique.

4. Dispositif selon la revendication 2 ou 3, caractérisé en ce que le capteur radar (48, 52) comporte une antenne (34, 38) qui est réalisée sensiblement circulaire dans le plan de la zone de saisie du détecteur ou capteur de déplacement ou de présence se trouvant perpendiculaire à l'axe vertical (10).

5. Dispositif selon l'une des revendications 1 à 3, caractérisé par une antenne, qui comporte des moyens pour régler la zone de saisie du détecteur de déplacement ou de présence.

6. Dispositif selon l'une des revendications 1 à 5, caractérisé en ce que le capteur radar (48, 52) comporte une antenne qui est réalisée sous la forme d'une antenne à fente, d'une antenne à conducteur à microbande ou sous la forme d'une autre antenne équipée d'émetteurs formés sur un substrat plat.

7. Dispositif selon l'une des revendications 1 à 6, caractérisé en ce que le capteur radar (48, 52) produit des signaux d'émission, qui sont situés entre 2 et environ 20 GHz.

8. Dispositif selon l'une des revendications 1 à 7, caractérisé en ce que l'organe de commande ou de contrôle comporte un organe d'accélération, qui est réalisé de telle façon qu'il se produise une désactivation du moyen d'éclairage seulement après un intervalle de temps prédéterminé après la saisie d'un déplacement anormal ou d'une présence anormale par l'organe de commande ou de contrôle.

9. Dispositif selon l'une des revendications 1 à 8, caractérisé par un organe (50, 38) apte à capter un éclairage de l'environnement, cet organe agissant sur l'organe de commande ou de contrôle, de telle façon qu'une activation ou une désactivation du moyen d'éclairage soit fonction d'un signal de commande émis par l'organe de saisie de l'éclairage de l'environnement.

10. Dispositif selon la revendication 9, caractérisé en ce que l'organe de commande est réalisé de façon à régler en continu et sans gradins la luminosité du moyen d'éclairage (14), en réaction au signal de commande de l'organe de saisie de la luminosité de l'environnement.
